# EUROPEAN PATENT APPLICATION

(11) **EP 3 952 041 A1**
(43) Date of publication of application: **09.02.2022**
(21) Application number: 20189652.9
(22) Date of filing: 05.08.2020
(51) Int. Cl.: H02B 1/56, H02B 13/025

(54) **COOLING SYSTEM FOR AN AIR INSULATED SWITCHGEAR**

(71) Applicant: ABB Schweiz AG, 5400 Baden (CH)
(72) Inventor: RUMLER, David, 664 51 Kobylnice (CZ); CERNOHOUS, Josef, 561 65 Jamne nad Orlici (CZ); HEMEK, Pavel, 603 00 Brno (CZ)
(74) Representative: Maiwald Patent- und Rechtsanwaltsgesellschaft mbH

(57) **Abstract**

The invention relates to cooling system for an air insulated switchgear, the cooling system comprising:
- a housing;
- a flap; and
- a retaining device.
The housing is configured to be installed in a wall of a compartment of an air insulated switchgear. The flap is connected to the housing. The flap is configured to move from an open position to a closed position. When the housing is installed in the wall of the compartment of the air insulated switchgear the housing is configured when the flap is in the open position to permit air to pass through the housing from outside the compartment to inside the compartment. The retaining device is configured to apply a retaining force to hold the flap in the open position.

## Description

### FIELD OF THE INVENTION

The present invention relates to a cooling system for an air insulated switchgear, a compartment for an air insulated switchgear, and an air insulated switchgear.

### BACKGROUND OF THE INVENTION

Medium voltage (MV) air insulated switchgear (AIS), also called panels, require cooling.

For example, ventilated partitions can be positioned between for example a circuit breaker compartment of an AIS and a cable compartment of the AIS. The ventilated partition enables cool air to enter the partition, cool the circuit breaker and then leave the switchgear.

With respect to the Internal arc classification (IAC) requirements, the compartment or compartments of the air insulated switchgear also require that air flow paths are protected from hot gases and particle flow in the case of internal arc fault in one or more compartments.

There is a need to provide a cooling solution for an air insulated switchgear, but also better meets IAC requirements.

### SUMMARY OF THE INVENTION

Therefore, it would be advantageous to have an improved cooling mechanism for an air insulated switchgear that also meets IAC requirements.

The object of the present invention is solved with the subject matter of the independent claims, wherein further embodiments are incorporated in the dependent claims.

In a first aspect, there is provided a cooling system for an air insulated switchgear. The cooling system comprises:
- a housing;
- a flap; and
- a retaining device.

The housing is configured to be installed in a wall of a compartment of an air insulated switchgear. The flap is connected to the housing. The flap is configured to move from an open position to a closed position. When the housing is installed in the wall of the compartment of the air insulated switchgear the housing is configured, when the flap is in the open position, to permit air to pass through the housing from outside the compartment to inside the compartment. The retaining device is configured to apply a retaining force to hold the flap in the open position.

In an example, the flap is configured to move from the open position to the closed position due to a pressure difference between the inside of the compartment and the outside of the compartment.

In an example, the retaining device is configured such that a threshold pressure difference between the inside of the compartment and the outside of the compartment overcomes the retaining force.

In an example, the retaining device is configured such that the retaining force can be varied.

In an example, the system comprises at least one lock configured to hold the flap in the closed position.

In an example, the at least one lock is mounted to at least one side wall of the housing.

In an example, each lock of the at least one lock comprises a structure that is configured to allow the flap to move from the open position to the closed position.

In an example, the structure is configured inhibit the flap to move from the closed position to the open position.

In an example, when the housing is installed in the wall of the compartment of the air insulated switchgear the cooling system is configured when the flap is in the closed position to inhibit air and/or gas to pass through the housing from inside the compartment to outside the compartment.

In a second aspect, there is provided a compartment for an air insulated switchgear. The compartment comprising a cooling system according to the first aspect.

In a third aspect, there is provided an air insulated switchgear, comprising:
- a first compartment;
- a second compartment
- a housing;
- a flap; and
- a retaining device.
The housing is installed between the first compartment and the second compartment. The flap is connected to the housing. The flap is configured to move from an open position to a closed position. When the flap is in an open position the housing is configured to permit air to pass through the housing from the second compartment to the first compartment. The retaining device is configured to applying a retaining force to hold the flap in the open position.

In an example, the flap is configured to move from the open position to the closed position due to a pressure difference between the first compartment and the second compartment.

In an example, at least one lock is configured to hold the flap in the closed position.

In an example, each lock of the at least one lock comprises a structure that is configured to allow the flap to move from the open position to the closed position.

In an example, the structure is configured inhibit the flap to move from the closed position to the open position.

In an example, when the flap is in the closed position air and/or gas is inhibited from passing through the housing from the first compartment to second the compartment.

The above aspects and examples will become apparent from and be elucidated with reference to the embodiments described hereinafter.

### BRIEF DESCRIPTION OF THE DRAWINGS

Exemplary embodiments will be described in the following with reference to the following drawing:

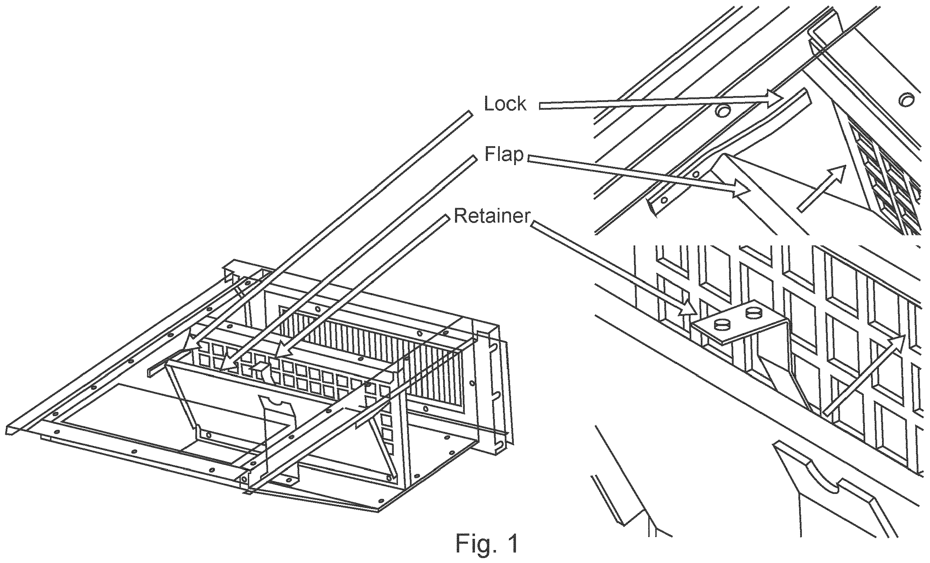

Fig. 1 shows an example of a housing, with flap, retaining device and lock that can be utilized as a cooling system for a compartment or compartments of a switchgear.

### DETAILED DESCRIPTION OF EMBODIMENTS

Fig. 1 relates a cooling system for an air insulated switchgear, a compartment for an air insulated switchgear, and an air insulated switchgear.

The cooling system for an air insulated switchgear comprises:
- a housing;
- a flap; and
- a retaining device.

The housing is configured to be installed in a wall of a compartment of an air insulated switchgear. The flap is connected to the housing. The flap is configured to move from an open position to a closed position. When the housing is installed in the wall of the compartment of the air insulated switchgear the housing is configured, when the flap is in the open position, to permit air to pass through the housing from outside the compartment to inside the compartment. The retaining device is configured to apply a retaining force to hold the flap in the open position.

In an example, the compartment is a circuit breaker compartment.

In an example, the system is a ventilated partition plate.

In an example, the air insulated switchgear is a medium voltage switchgear.

According to an example, the flap is configured to move from the open position to the closed position due to a pressure difference between the inside of the compartment and the outside of the compartment.

In an example, the pressure difference relates to a higher pressure inside the compartment to outside the compartment.

According to an example, the retaining device is configured such that a threshold pressure difference between the inside of the compartment and the outside of the compartment overcomes the retaining force.

According to an example, the retaining device is configured such that the retaining force can be varied.

According to an example, the system comprises at least one lock configured to hold the flap in the closed position.

According to an example, the at least one lock is mounted to at least one side wall of the housing.

According to an example, each lock of the at least one lock comprises a structure that is configured to allow the flap to move from the open position to the closed position.

According to an example, the structure is configured inhibit the flap to move from the closed position to the open position.

In an example, each lock of the at least one lock comprises a bracket fixed to a wall of the housing, and where a distance from the wall of the housing to an outer extent of the bracket increases in magnitude in a direction from the open position to the closed position.

According to an example, when the housing is installed in the wall of the compartment of the air insulated switchgear the cooling system is configured, when the flap is in the closed position, to inhibit air and/or gas to pass through the housing from inside the compartment to outside the compartment.

In an example, when the housing is installed in the wall of the compartment of the air insulated switchgear the cooling system is configured, when the flap is in the closed position, to inhibit air and/or gas to pass through the housing from inside the compartment to outside the compartment when the pressure inside the compartment is greater than the pressure outside the compartment.

In an example, when the housing is installed in the wall of the compartment of the air insulated switchgear the cooling is configured, when the flap is in the closed position, to inhibit air and/or gas to pass through the housing from outside the compartment to inside the compartment.

In an example, when the housing is installed in the wall of the compartment of the air insulated switchgear the cooling is configured, when the flap is in the closed position, to inhibit air and/or gas to pass through the housing from outside the compartment to inside the compartment when the pressure outside the compartment is greater than the pressure inside the compartment..

From the above description, it is clear that the above described system can be installed in a compartment of or for an air insulated switchgear.

In an example, the air insulated switchgear is a medium voltage switchgear.

The new technology can be utilized in an air insulated switchgear comprising:
- a first compartment;
- a second compartment
- a housing;
- a flap; and
- a retaining device.
The housing is installed between the first compartment and the second compartment. The flap is connected to the housing. The flap is configured to move from an open position to a closed position. When the flap is in an open position the housing is configured to permit air to pass through the housing from the second compartment to the first compartment. The retaining device is configured to applying a retaining force to hold the flap in the open position.

In an example, the first compartment is a circuit breaker compartment and the second compartment is a cable connection compartment.

In an example, the air insulated switchgear is a medium voltage switchgear.

According to an example, the flap is configured to move from the open position to the closed position due to a pressure difference between the first compartment and the second compartment.

The pressure difference can relate to a higher pressure in the first compartment to that in the second compartment.

In an example, the retaining device is configured such that a threshold pressure difference between the first compartment and the second compartment overcomes the retaining force.

In an example, the retaining device is configured such that the retaining force can be varied.

According to an example, at least one lock is configured to hold the flap in the closed position.

In an example, the at least one lock is mounted to at least one side wall of the housing.

According to an example, each lock of the at least one lock comprises a structure that is configured to allow the flap to move from the open position to the closed position.

According to an example, the structure is configured inhibit the flap to move from the closed position to the open position.

In an example, each lock of the at least one lock comprises a bracket fixed to a wall of the housing, and where a distance from the wall of the housing to an outer extent of the bracket increases in magnitude in a direction from the open position to the closed position.

According to an example, when the flap is in the closed position air and/or gas is inhibited from passing through the housing from the first compartment to second the compartment.

In an example, when the flap is in the closed position air and/or gas is inhibited from passing through the housing from the first compartment to second the compartment when the pressure in the first compartment is greater than the pressure in the second compartment.

In an example, when the flap is in the closed position air and/or gas is inhibited from passing through the housing from the second compartment to first the compartment.

In an example, when the flap is in the closed position air and/or gas is inhibited from passing through the housing from the second compartment to the first the compartment when the pressure in the second compartment is greater than the pressure in the first compartment.

Thus a new technology is provided, where a flap is automatically closed during for example internal arc event that causes rapid temperature rises and rapid increase in gas and air pressure. The flap is then held in a closed position in order that negative pressures can be handled, if for example a secondary internal arc event occurs elsewhere within the switchgear on the other side of the flap.

The new technology however also has a retaining capability that holds a flap open position, thereby preventing the flap becoming opened to wide that can or could compromise the automatic closing functionality if an internal arc event occurred, and also prevents accidental closing of the flap that could compromise or disable switchgear ventilation.

The flat can be locked on both sides, in a closed position in order that after initial pressure spike during an internal arc event, the flap remains closed and protect service personnel from injury.

However, as described above the flap is retained in a neutral position in order that optimal performance is achieved, with good ventilation provided at the same time enabling reliable closing with an optimum closing time.

Thus, an improved design is provided for fast reaction relating to an internal pressure rise, with improved IAC performance, gas tightness, reaction time improvement, a close lock, negative pressure resistance, with better pressure sensitivity and improved ventilation.

While the invention has been illustrated and described in detail in the drawing and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A cooling system for an air insulated switchgear, the cooling system comprising:
- a housing;
- a flap; and
- a retaining device;
wherein, the housing is configured to be installed in a wall of a compartment of an air insulated switchgear;
wherein, the flap is connected to the housing;
wherein, the flap is configured to move from an open position to a closed position;
wherein, when the housing is installed in the wall of the compartment of the air insulated switchgear the housing is configured when the flap is in the open position to permit air to pass through the housing from outside the compartment to inside the compartment; and
wherein, the retaining device is configured to apply a retaining force to hold the flap in the open position.

2. Cooling system according to claim 1, wherein the flap is configured to move from the open position to the closed position due to a pressure difference between the inside of the compartment and the outside of the compartment.

3. Cooling system according to any of claims 1-2, wherein the retaining device is configured such that a threshold pressure difference between the inside of the compartment and the outside of the compartment overcomes the retaining force.

4. Cooling system according to any of claims 1-3, wherein the retaining device is configured such that the retaining force can be varied.

5. Cooling system according to any of claims 1-4, wherein the system comprises at least one lock configured to hold the flap in the closed position.

6. Cooling system according to claim 5, wherein the at least one lock is mounted to at least one side wall of the housing.

7. Cooling system according to any of claims 5-6, wherein each lock of the at least one lock comprises a structure that is configured to allow the flap to move from the open position to the closed position.

8. Cooling system according to claim 7, wherein the structure is configured inhibit the flap to move from the closed position to the open position.

9. Cooling system according to any of claims 1-8, wherein, when the housing is installed in the wall of the compartment of the air insulated switchgear the cooling system is configured when the flap is in the closed position to inhibit air and/or gas to pass through the housing from inside the compartment to outside the compartment.

10. A compartment for an air insulated switchgear, the compartment comprising a cooling system according to any of claims 1-9.

11. An air insulated switchgear, comprising:
- a first compartment;
- a second compartment
- a housing;
- a flap; and
- a retaining device;
wherein, the housing is installed between the first compartment and the second compartment;
wherein, the flap is connected to the housing;
wherein, the flap is configured to move from an open position to a closed position;
wherein, when the flap is in an open position the housing is configured to permit air to pass through the housing from the second compartment to the first compartment; and
wherein, the retaining device is configured to applying a retaining force to hold the flap in the open position.

12. Switchgear according to claim 11, wherein the flap is configured to move from the open position to the closed position due to a pressure difference between the first compartment and the second compartment.

13. Switchgear according to any of claims 11-12, wherein at least one lock is configured to hold the flap in the closed position.

14. Switchgear according to any of claims 11-13, wherein each lock of the at least one lock comprises a structure that is configured to allow the flap to move from the open position to the closed position; and wherein the structure is configured inhibit the flap to move from the closed position to the open position.

15. Switchgear according to any of claims 11-14, wherein, when the flap is in the closed position air and/or gas is inhibited from passing through the housing from the first compartment to second the compartment.
